# EUROPEAN PATENT APPLICATION

(11) **EP 4 850 832 A1**
(43) Date of publication of application: **09.12.2026**
(21) Application number: 26179261.8
(22) Date of filing: 18.05.2026
(51) Int. Cl.: B22F 3/15, B22F 7/06, B22F 10/28, B22F 10/64, B33Y 10/00, B33Y 40/20, B22F 5/00, B22F 5/04, B22F 10/14, B22F 10/34, B33Y 40/10, B33Y 80/00, C22C 1/059, F01D 5/00

(54) **METHOD FOR MANUFACTURING LOW-COST ADDITIVELY MANUFACTURED COMPONENTS**

(30) Priority: 04.06.2025 US 202563817407 P; 17.09.2025 US 202519331090
(71) Applicant: The Boeing Company, Arlington, VA 22202 (US)
(72) Inventor: YOUSEFIANI, Ali, TUSTIN, CA (US); CUMMINGS, Scott, LONG BEACH, CA (US)
(74) Representative: Plasseraud IP

(57) **Abstract**

A method for manufacturing a consolidated component includes fabricating a shell using a powder bed additive manufacturing process, wherein the shell defines an enclosed internal volume. Powder is allowed to remain within the enclosed internal volume during fabrication of the shell, and the shell and the powder are hot isostatically pressed to densify the powder and form a consolidated component.

## Description

### PRIORITY

This application claims priority from U.S. Ser. No. 63/817,407 filed on June 4, 2025, the entire contents of which are incorporated herein by reference.

### FIELD

The present application relates to the field of additive manufacturing. More particularly, it relates to methods for producing consolidated metallic components using an additively manufactured shell containing unfused powder, with consolidation achieved through hot isostatic pressing.

### BACKGROUND

Additive manufacturing is extensively employed in producing complex metallic components with precise geometries and high dimensional accuracy. Laser Powder Bed Fusion (L-PBF), a common additive manufacturing technique, involves selectively melting and fully consolidating metal powder layers, layer-by-layer, using a high-power laser beam. This meticulous melting process is inherently time-consuming, particularly for large-scale or dense components, significantly impacting manufacturing throughput and overall production costs.

Components fabricated using L-PBF methods may require a subsequent hot isostatic pressing (HIP) step to address residual porosity, enhance mechanical properties, and ensure structural integrity. HIP treatment is commonly practiced in the additive manufacturing industry to achieve fully dense components suitable for demanding applications.

While the combination of L-PBF followed by HIP effectively produces high-quality components, the extensive printing time required to achieve full density throughout complex internal geometries presents substantial practical and economic challenges. These limitations underscore the ongoing need to explore methods that can reduce additive manufacturing build times and enhance overall manufacturing efficiency.

### SUMMARY

In one embodiment, the present description relates to a method for manufacturing a component.

An example method includes fabricating a shell using a powder bed additive manufacturing process, the shell defining an enclosed internal volume, allowing powder to remain within the enclosed internal volume during fabrication of the shell, and hot isostatically pressing the shell and the powder to densify the powder and form a consolidated component.

The example method may further comprise pre-processing the powder by at least one of powder mixing, mechanical milling, and ultrasonic particulate coating. The mechanical milling may be selected from tumbler ball milling, vibratory ball milling, attrition milling, and rod milling. The example method may further comprise sealing the shell. The sealing the shell may comprise mechanical crimping, welding, or both. The welding may be selected from tungsten inert gas welding, laser welding, or solid-state welding.

Another example method includes fabricating a shell using a powder bed additive manufacturing process, the shell defining an enclosed internal volume, allowing powder to remain within the enclosed internal volume during fabrication of the shell, sealing the shell having the powder within the enclosed internal volume, hot isostatically pressing the shell and the powder after sealing to densify the powder and diffusion bond the powder to the shell to form a consolidated component, and performing post-processing on the consolidated component to form a final component. The shell remains as a structural portion of the final component.

The powder may comprise at least one of niobium, tungsten and titanium. The powder may comprise niobium with 23 weight percent tungsten and 9 weight percent titanium. The powder may have a spherical particle morphology with a particle size distribution between 15 micrometers and 63 micrometers. The method may further comprise vacuum degassing the shell prior to sealing, at a temperature corresponding to approximately 0.3 Tm and a pressure of approximately 10⁻⁶ torr. The hot isostatic pressing may be performed at approximately 900°C, 20 ksi, and for a duration of approximately three hours. The post-processing may comprise heat treatment and final machining. The consolidated component may be a blade component.

Other embodiments of the disclosed methods will become apparent from the following detailed description, the accompanying drawings and the appended claims.

### BRIEF DESCRIPTION OF THE DRAWINGS

FIG. 1 is a flow diagram illustrating an example method for manufacturing a consolidated component, comprising fabricating an additively manufactured shell encapsulating internal powder, sealing the shell, hot isostatically pressing the structure, and performing final post-processing.
FIG. 2 is a perspective view of an example additively manufactured shell fabricated by a powder bed fusion process, such as Laser Powder Bed Fusion (L-PBF), defining an enclosed internal volume corresponding to the desired geometry of a preform of an example component (a high-pressure turbine blade in this case).
FIG. 3 is a cross-sectional view of the example additively manufactured shell from FIG. 2, illustrating the enclosed internal volume containing unsintered powder retained during fabrication.
FIG. 4 is a schematic depiction of an example preform undergoing hot isostatic pressing (HIP), highlighting consolidation of the internal powder and metallurgical bonding with the shell.
FIG. 5 illustrates an example hot forging step performed after HIP consolidation, refining the structure and geometry of the preform to arrive at the final component while maintaining the integrated shell.
FIG. 6 is a cross-sectional view of an example final consolidated component after completing all processing steps, showing the shell fully integrated as a permanent structural portion of the finished part.

### DETAILED DESCRIPTION

The method begins with the fabrication of a shell structure using a powder bed-based additive manufacturing process. The shell is constructed in a layer-by-layer fashion directly from a powder feedstock. The build parameters can be selected to achieve a thin-walled geometry with sufficient structural integrity and minimal porosity. The shell geometry defines an enclosed internal volume, which may be designed to correspond to the desired shape or form factor of the component. The shell is fabricated from the same powder material intended to form the bulk of the final component, ensuring chemical and metallurgical compatibility.

During the additive manufacturing process, unsintered powder naturally remains within the internal volume defined by the shell. This powder, being the same material as that used to construct the shell, becomes passively encapsulated as the shell structure is completed. No separate powder-filling or sealing operation is required. The encapsulation occurs inherently as a result of the powder bed process and the selective fusion strategy employed during shell fabrication. The powder within the shell remains loose and unconsolidated, and may retain the inert gas environment present within the build chamber, reducing the risk of oxidation or contamination prior to HIP.

Following the additive manufacturing step, the encapsulated structure is subjected to a hot isostatic pressing cycle. The HIP process applies elevated temperature and isostatic gas pressure to the structure for a time sufficient to fully consolidate the internal powder. During this step, the powder can undergo plastic deformation, diffusion, and sintering, resulting in a fully dense solid mass. Simultaneously, the interface between the internal powder and the surrounding shell experiences diffusion bonding, thereby forming a metallurgically continuous, homogeneous component.

### DESIGN OF COMPONENT

The design phase begins with identifying the performance requirements for the component, which may be a final, finished component or a preform used in one or more subsequent forming steps. These requirements may include mechanical loading conditions, thermal gradients, chemical exposure, weight constraints, dimensional tolerances, and cost targets. Based on these factors, the designer selects appropriate materials, geometric features, and processing strategies for both the outer shell and the powder core, aiming to control performance while minimizing material usage and post-processing requirements. The design must also consider compatibility with additive manufacturing (AM), hot isostatic pressing (HIP), and any post-HIP processing operations.

### Materials Selection Based on Application Requirements

Material selection is driven by the requirements of the final consolidated component, which is formed from a single material system comprising both the shell and the encapsulated powder. The selected material must exhibit suitable performance under hot isostatic pressing (HIP) conditions and in the intended application environment. Depending on the use case, the material may require properties such as high-temperature strength, creep resistance, fatigue resistance, oxidation or corrosion resistance, thermal conductivity, or dimensional stability.

Because the shell and the encapsulated powder are compositionally identical, the material must be compatible with powder bed additive manufacturing and capable of densifying under HIP to achieve a fully consolidated, homogeneous structure. Suitable material systems include, but are not limited to, titanium alloys, nickel-based superalloys, cobalt-based alloys, stainless steels, and refractory metal alloys such as molybdenum, niobium, tungsten, and their alloys.

In some embodiments, the powder feedstock-used for both shell formation and encapsulated core-may incorporate enhancement particulates to tailor the final material properties. These may include oxides (e.g., yttria, alumina, zirconia), nitrides (e.g., titanium nitride, boron nitride), borides (e.g., titanium diboride), or carbides (e.g., silicon carbide, titanium carbide). Such additions may improve wear resistance, creep strength, thermal conductivity, or microstructural stability during HIP and subsequent service. Because both the shell and the core are derived from the same feedstock, any particulate additions are distributed uniformly throughout the final component.

### Computer-Aided Design (CAD)

Component geometry is developed using computer-aided design (CAD) software that enables full three-dimensional modeling of both the outer shell and internal fill volume. The geometry may incorporate complex or conformal features that take advantage of additive manufacturing capabilities, such as integrated channels, variable wall thickness, or lattice structures. The shell geometry is configured to serve multiple purposes: to define the final shape of the component, to contain the powder during HIP, to provide pressure resistance, and to incorporate features necessary for sealing, handling, or post-processing. CAD models may also include auxiliary features such as fill ports, degas tubes, or datum references. The shell may be designed to approximate a near-net shape of the final component, minimizing the need for extensive machining after HIP consolidation.

### FEA / Simulation

Simulation tools such as finite element analysis (FEA), computational fluid dynamics (CFD), or process modeling software may be used to predict and control component behavior during manufacturing and in-service conditions. These simulations may assess powder compaction behavior under HIP pressure and temperature, thermal expansion or distortion of the shell, residual stress development, and the effectiveness of interfacial bonding between the shell and core. Simulations may also inform decisions on material selection, wall thickness, reinforcement features, and thermal barrier integration. In some cases, simulation outputs may be directly fed back into the CAD model to refine part geometry or control HIP cycle parameters. This design-simulation feedback loop helps ensure that the component can be successfully manufactured and will meet functional requirements in service.

### FEEDSTOCK COMPOSITIONAL STATE

The feedstock used to fabricate the shell and powder core is selected to deliver the desired properties required both during processing-particularly during hot isostatic pressing (HIP)-and in the final operating environment of the component. The feedstock must also be compatible with the selected additive manufacturing (AM) method and capable of producing dense, defect-free features upon consolidation. The compositional state of the feedstock can vary depending on the alloy system, manufacturing constraints, and desired functional properties.

### Composition

The material may be selected from a wide range of metallic systems that offer high-temperature strength, corrosion or oxidation resistance, creep resistance, and other desired properties. Suitable alloy families include nickel-based superalloys, cobalt-based alloys, titanium-based alloys, refractory metal alloys (e.g., those based on molybdenum, tungsten, tantalum, or niobium), stainless steels, and precious metal-based alloys such as platinum-rhodium or iridium alloys. Selection of the alloy system is influenced by both service conditions and the material's printability within the constraints of the chosen AM process.

### Pre-Alloyed Feedstock

In some embodiments, the feedstock is provided as pre-alloyed powder, where the complete chemical composition is established during primary melting and powder production, such as gas or plasma atomization. Pre-alloyed powders provide tight control over composition and solidification structure and are especially well-suited to additive processes such as laser powder bed fusion (LPBF), electron beam melting (EBM), and other powder bed-based AM systems. This format simplifies material certification, provides consistency across builds, and facilitates process modeling based on known alloy behavior.

### Blended Elemental Feedstock

In other embodiments, the feedstock may comprise a blend of elemental powders, which may alloy in situ during the AM process or through a post-build heat treatment or HIP cycle. Blended elemental feedstocks may be advantageous where specific alloy formulations are not readily available in pre-alloyed form, or where flexibility in tailoring composition is required. This approach can also enable cost savings by using commodity elemental powders and allows for incorporation of non-standard compositions, including transitional or compositionally graded regions.

### Inclusion of Enhancement Particulates

To further tailor the microstructure or properties of the component, enhancement particulates may be added to either pre-alloyed or blended elemental feedstock. These particulates may remain as distinct phases within the matrix or may partially dissolve depending on thermal exposure during AM, heat treatment, and HIP. Such additions can be used to improve creep resistance, oxidation performance, hardness, thermal conductivity, or resistance to grain growth.

### Oxide-Based Enhancement Particulates

Oxide particulates may include yttria (Y₂O₃), alumina (Al₂O₃), zirconia (ZrO₂), and hafnia (HfO₂). These oxides may enhance high-temperature performance by providing thermal stability, oxidation resistance, or dispersion strengthening. In some cases, they may function analogously to oxide dispersion strengthened (ODS) systems.

### Nitride-Based Enhancement Particulates

Nitrides such as titanium nitride (TiN), zirconium nitride (ZrN), and boron nitride (BN) may be included to improve wear resistance, thermal conductivity, or chemical inertness. These materials are often stable at elevated temperatures and may also contribute to microstructural refinement.

### Boride-Based Enhancement Particulates

Titanium diboride (TiB₂) and zirconium diboride (ZrB₂) may be added to increase surface hardness, thermal resistance, or oxidation stability. These particulates may also serve as nucleation sites during solidification, thereby refining grain size and improving mechanical uniformity.

### Carbide-Based Enhancement Particulates

Carbide reinforcements such as titanium carbide (TiC), zirconium carbide (ZrC), and silicon carbide (SiC) may be employed to enhance erosion resistance, maintain structural rigidity at elevated temperatures, and improve overall toughness. Carbides are often used in harsh environments where wear or impact resistance is desired.

### Other or Complex Enhancement Particulates

Additional complex reinforcements may include intermetallic compounds (e.g., Ni₃Al, TiAl) or engineered multi-phase particles. In some embodiments, such complex particulates are tailored for site-specific performance or may be used in graded compositions within the shell structure.

### FEEDSTOCK MORPHOLOGY

The morphology of the feedstock used for shell fabrication is selected based on the requirements of the additive manufacturing (AM) process, the alloy system, and the desired physical and mechanical characteristics of the final component. Feedstock morphology influences flowability, powder layer uniformity, packing density, melt pool behavior, and ultimately, the density and surface quality of the as-fabricated shell. Morphology selection also affects process stability and repeatability, particularly in powder-based AM methods.

### Powder Feedstock

Powder-based feedstocks may include a range of particle shapes and size distributions, which are chosen based on process demands and material properties. Common morphologies include:
Spherical powders, produced via gas or plasma atomization, are favored for processes such as laser powder bed fusion (LPBF), electron beam melting (EBM), and other powder bed-based AM systems. Spherical powders exhibit excellent flowability, uniform layer spreading, and predictable melting behavior, which promotes high part density, smooth surface finish, and tight dimensional control.

Spheroidal or near-spherical powders offer an intermediate morphology, often at lower cost than fully spherical atomized powders. These are suitable for certain binder jetting or DED processes where slightly reduced flowability can be tolerated.

Granular or irregular powders, which may be produced by mechanical crushing, hydride-dehydride processing, or other techniques, are used in AM methods where powder spreading is less important. These include binder jetting, cold spray, or certain hybrid AM methods. While more economical, irregular powders can lead to reduced packing density, increased porosity, or inconsistent melt behavior in processes requiring localized energy input.

Particle size distribution (PSD) is also an important factor. Finer particles may enhance surface finish and resolution but may increase risk of oxidation and agglomeration. Coarser particles improve flow and may be advantageous for thicker layers or high-deposition processes. In some cases, bimodal or engineered PSDs may be used to control packing and minimize porosity.

### PRE-PROCESSING OF POWDER

The powder feedstock may undergo one or more pre-processing operations to improve flowability, homogeneity, compaction behavior, and final material properties. These operations may include mechanical mixing, compositional blending, milling, particle surface modification, and particle size classification. The goal of these steps is to prepare the powder material for additive manufacturing and densification during hot isostatic pressing (HIP), while maintaining compositional uniformity and microstructural consistency.

### Powder Mixing

Powder mixing may be employed to homogenize one or more powder lots of the same composition, normalize flowability across batches, or reduce compositional gradients introduced during storage or transport. Mixing can be performed using rotating drum mixers, double-cone mixers, or other low-energy techniques that preserve particle morphology. Homogeneous mixing is particularly important for ensuring consistent fill behavior, especially when powder batches are sourced from multiple suppliers or when sensitive alloy compositions are involved.

### Blending and Mixing of Discrete Powders

In many embodiments, the powder feedstock may be produced through compositional blending of two or more discrete powder types. These may include:
Elemental blends, in which elemental metal powders (e.g., Nb, W, Zr) are combined to form a desired alloy composition. These blends may react or homogenize during HIP to create a metallurgically bonded solid solution or multiphase structure.

Pre-alloyed blends, where multiple alloy powders are combined to adjust the final chemistry or to engineer spatial variations in composition or mechanical behavior.

Hybrid blends, which combine elemental powders with enhancement particulates, or pre-alloyed powders with discrete ceramic, intermetallic, or complex particulates to impart additional properties such as wear resistance, thermal conductivity, or creep resistance.

Morphology-engineered blends, which include powders of different shapes or size distributions (e.g., spherical and fine, granular and flake) to control packing density, reduce porosity, or control sintering kinetics.

Blending may be performed under dry or wet conditions, and with or without binders, depending on downstream fill method and sensitivity to segregation.

Milling is used to reduce particle size, deagglomerate soft agglomerates, and promote uniform distribution of alloying elements or reinforcement phases. Milling methods may include:

Tumbler ball milling, which uses rotational energy to grind powder through cascading motion of grinding media. Suitable for general-purpose blending or mild particle size reduction.

Vibratory ball milling, which induces high-frequency vibration to increase impact energy and accelerate powder refinement.

Attrition milling, where powder is agitated in a stirred media chamber, allowing for finer and more controlled particle size reduction, often used in preparing composite or nanostructured powders.

Hammer and rod mills, may be used for more aggressive size reduction or for breaking apart friable agglomerates.

Milling parameters are selected to balance powder refinement with preservation of flowability and avoidance of excessive contamination or cold welding.

### Ultrasonic Particulate Coating

Ultrasonic processing may be employed to apply nanoscale or microscale coatings to the surface of core powder particles. These coatings may include functional materials such as oxides, carbides, or lubricants, and may be used to improve dispersion, reduce oxidation, promote sintering, or create core-shell particle architectures. Ultrasonic energy enhances uniformity of coating distribution and may help embed fine particulates into the host powder surface without significant thermal exposure. In some embodiments, ultrasonic coating is used to embed diffusion barrier particles or to support engineered gradients across the powder volume.

### Final Particle Size Distribution (PSD)

Following any blending, milling, or coating operations, the final feedstock may be classified to achieve a target particle size distribution (PSD). PSD is selected based on desired packing behavior, flowability, and sinterability, and may be tailored to the geometry of the shell and HIP processing window. Common PSD ranges may include:
Less than 10 micrometers, often used to enhance sinterability, but may suffer from poor flow and increased oxidation risk.

10 to 60 micrometers, offering a balance of flow and packing for high-density fill applications.

60 to 150 micrometers, suitable for larger shell geometries or where flowability is prioritized over surface area.

150 to 300 micrometers, often used in larger-diameter fill ports or when coarser powders are compatible with the HIP profile.

300 to 600 micrometers and 600 to 1000 micrometers, occasionally used for engineered porosity, functionally graded materials, or in multimodal blends.

Combinations of distributions, including bimodal or trimodal blends, may be used to improve packing efficiency, increase tap density, or control sintering shrinkage.

Classification may be performed using sieving, air classification, or centrifugal separation techniques. In some embodiments, powders are processed in inert or vacuum environments to preserve oxidation-sensitive constituents during classification.

### Degassing

The powder may undergo degassing to remove entrapped gases, absorbed moisture, or volatile contaminants from the powder. Degassing may be performed under vacuum and elevated temperature and serves to reduce residual pressure within the component during HIP, which could otherwise impair consolidation or result in internal porosity. The degassing protocol is tailored to the material system, surface condition, and the sensitivity of the HIP consolidation profile to residual gas.

### Temperature

Degassing temperature is generally selected as a fraction of the melting temperature (Tm) of the core powder material, where Tm is expressed in Kelvin. The temperature must be high enough to drive off absorbed gases and activate surface diffusion, but low enough to avoid sintering or structural changes prior to HIP. Ranges may include:
0.0 Tm to 0.3 Tm: Used for low-temperature removal of physically adsorbed moisture and light volatiles. Common for less reactive materials.

0.3 Tm to 0.5 Tm: A moderate-temperature range that activates some chemisorbed species and may improve surface cleanliness. This range is often used for sensitive powder systems.

>0.5 Tm: High-temperature degassing is sometimes used to remove deep-seated volatiles or promote pre-diffusion bonding but must be carefully controlled to avoid pre-sintering or phase transformation of the core powder.

Degassing duration may be between 1 and 8 hours, depending on material, component size, and vacuum system capability.

### Pressure

Vacuum pressure during degassing is also an important parameter. Lower pressures enable the removal of tightly bound gas species and promote outgassing from fine porosity within the powder bed. Suitable ranges include:
10⁻¹ to 10⁻³ torr: Suitable for basic moisture and gas removal. Often used for nonreactive alloys.

10⁻³ to 10⁻⁶ torr: High vacuum range, commonly used for aerospace-grade powders, reactive metals, or where high final density and low residual gas content are required.

10⁻⁶ to 10⁻⁹ torr: Ultra-high vacuum degassing may be used for highly reactive or extremely purity-sensitive systems, such as refractory alloys or precision thruster components.

Vacuum quality directly influences final part cleanliness, porosity, and interfacial bonding. In many embodiments, degassing is performed with the shell connected to a vacuum port via a temporary stem or nozzle, which is subsequently sealed off after degassing is complete.

### FABRICATION METHODS FOR SHELL

The shell is fabricated using a powder bed additive manufacturing process, which enables the creation of enclosed geometries that passively encapsulate unsintered powder during the build. These methods construct parts in a layer-by-layer fashion by selectively consolidating powder feedstock, allowing precise control over geometry, wall thickness, and surface finish. The shell is made from the same powder feedstock as the internal volume, facilitating homogeneous consolidation during subsequent hot isostatic pressing (HIP).

### Laser Powder Bed Fusion (L-PBF)

Laser powder bed fusion (L-PBF) employs a high-power laser to selectively melt regions of a metal powder bed, guided by a digital design file. Layers are built sequentially to form a solid part with excellent resolution, surface quality, and near-full density. L-PBF is well-suited for fabricating thin-walled shell structures that enclose internal volumes, with sufficient mechanical integrity to support HIP. It supports a wide range of alloys, including titanium, nickel-based superalloys, stainless steels, and refractory metals.

### Electron Beam Powder Bed Fusion (EB-PBF)

Electron beam powder bed fusion (EB-PBF) uses a focused electron beam to selectively melt metal powder in a vacuum environment. EB-PBF provides efficient thermal management, supports high build rates, and is particularly effective for processing high-temperature or oxidation-sensitive alloys. Like L-PBF, it enables fabrication of fully enclosed shell structures with internal, unsintered powder, eliminating the need for post-build filling or sealing operations.

### Binder Jetting

Binder jetting is a powder bed process in which a liquid binder is selectively deposited onto a metal powder bed to build a "green" part. Following printing, the part may be sintered and may be infiltrated with a secondary metal. In certain embodiments, binder jetting may be used to fabricate shell geometries that encapsulate loose powder internally. While binder jetting offers advantages in build speed and large-format scalability, it generally requires additional processing to achieve structural integrity prior to HIP and may be best suited for non-critical or low-stress components in this context.

Powder bed methods, such as L-PBF and EB-PBF, enable in-situ encapsulation of powder feedstock, streamline component fabrication, and ensure material continuity between the shell and internal volume. This integrated approach eliminates conventional powder filling and sealing steps, reducing processing time, complexity, and cost.

### SEALING THE FILLED SHELL

Following powder filling and any optional degassing, the open shell is hermetically sealed to prepare the assembly for hot isostatic pressing (HIP). The sealing process is important to prevent gas ingress or egress during HIP and to maintain internal pressure equilibrium during densification. The chosen sealing technique must ensure structural integrity under HIP conditions while preserving the composition, geometry, and functionality of the shell as a structural part of the final component.

Sealing may be accomplished by mechanical deformation (e.g., crimping), fusion welding, solid-state bonding, or combinations thereof. The selection of a sealing method depends on the shell material, wall thickness, fill configuration, HIP temperature and pressure, and the overall geometry of the assembly.

### Crimping the Filled Shell

Crimping is a mechanical sealing method in which a portion of the shell, for example a tubular extension or fill stem, is plastically deformed to close off the powder-filled cavity. Crimping may serve as a temporary seal during degassing or may be used in conjunction with welding to establish a permanent seal. It is particularly useful for ductile shell materials and can be performed with simple tooling.

Room Temperature Crimping: This method is suitable for shell materials that exhibit sufficient ductility at ambient temperature. The fill tube or sealing flange is mechanically pinched or folded using dies or forming tools. Room temperature crimping minimizes thermal exposure but may introduce local stress concentrations if not properly controlled.

Elevated Temperature Crimping: In some cases, crimping is performed at elevated temperatures to reduce the yield strength of the shell material, allowing for tighter sealing without fracture. This method is advantageous for high-strength or low-ductility alloys, particularly those used in aerospace or refractory systems. Local heating may be applied using induction coils, resistance heaters, or torches.

Crimping may also be used to collapse sacrificial volumes within the shell to control powder movement during HIP or to provide a transition region for subsequent weld sealing.

### Welding the Filled Shell

Welding is commonly used to provide a hermetic and structurally robust seal after powder filling and optional crimping. The weld joint must be leak-tight, metallurgically sound, and capable of withstanding HIP temperatures and pressures without distortion or failure. The weld may also serve as a mechanical reinforcement of the crimped region.

### Common welding techniques include:

Tungsten Inert Gas (TIG) Welding: TIG welding provides precise, low-contamination fusion suitable for a wide range of alloys, including stainless steels, titanium, and superalloys. It is commonly used for sealing small or medium-diameter fill ports and enables tight control over weld bead shape and penetration. TIG welding may be performed manually or with automated orbital welding equipment.

Metal Inert Gas (MIG) Welding: MIG welding may be used for higher deposition rates or larger joint volumes. While less precise than TIG, it may be suitable for lower-performance shells or for non-critical sealing areas. Shielding gas selection (e.g., argon, helium, argon-hydrogen blends) is tailored to the alloy system.

Laser Welding: Laser welding offers high precision, low heat input, and excellent control for thin-walled shells or intricate geometries. It is especially useful for sealing refractory metals or reactive materials with minimal distortion. Pulsed or continuous-wave laser systems may be used depending on thickness and material.

Solid-State Welding: Solid-state welding techniques, such as friction stir welding (FSW) or diffusion bonding, may be employed when minimal thermal input or phase transformation is desired. These methods preserve base material microstructure and are particularly useful for joining dissimilar metals or when avoiding fusion zone defects is important. In some embodiments, the shell may be designed with interlocking mechanical features to facilitate solid-state joining.

The final seal may be inspected using non-destructive techniques such as helium leak testing, X-ray or computed tomography (CT), dye penetrant testing, or ultrasonic inspection to verify hermeticity and structural integrity prior to HIP.

### HOT ISOSTATIC PRESSING (HIP) CONSOLIDATION

Hot isostatic pressing (HIP) is a key step in the manufacturing process, wherein the powder-filled and sealed shell is exposed to elevated temperature and isostatic gas pressure for a specified time. The HIP cycle densifies the core powder, eliminates internal porosity, and promotes diffusion bonding between the core and the shell. The shell serves as both a containment capsule and an active participant in the final structure, providing structural integrity during HIP and remaining as part of the finished component.

HIP enables full consolidation without directional shrinkage or the need for sintering atmospheres, making it highly effective for complex geometries, internal cavities, and multi-material systems.

### Hot Isostatic Pressing

HIP may be conducted in a high-pressure vessel filled with an inert gas, such as argon or nitrogen, which acts as the pressure medium. The process involves simultaneous application of heat and pressure, which causes the powder core to compact and densify via plastic deformation, creep, and diffusion. The process may also activate diffusion bonding between the core and the interior surface of the shell, forming a monolithic, metallurgically bonded interface.

The HIP parameters are tuned based on material system, desired final density, part size, and application-specific mechanical requirements. The cycle may be preceded by vacuum purging or inert backfilling, and completed with a natural or controlled cooling step.

### Setting HIP Final Preform Density

The initial powder fill may vary in bulk density based on powder morphology and vibration or compaction during assembly. HIP serves to densify this preform to a final relative density approaching 100%. Preform density directly affects required HIP pressure and time.

80%-90% Preform Density: Reflects loosely packed powders or low tap-density morphologies. These require higher pressures and longer durations to achieve full densification.

90%-95% Preform Density: Reflects moderately packed powder fills using vibratory compaction or bimodal PSDs. Allows for efficient consolidation with moderate HIP parameters.

95%-100% Preform Density: Achievable through tightly packed spherical powders, pre-compacted green bodies, or pre-sintered inserts. These enable shorter HIP cycles and are often used when dimensional control is important.

The preform density may be determined via modeling, dry runs with tracer particles, or in-situ monitoring of fill procedures.

### Setting HIP Temperature

Temperature can be expressed as a fraction of the melting temperature (Tm) of the core alloy, in Kelvin. It must be high enough to activate diffusion and promote creep, but below the melting or phase transformation threshold for the material system.

0.3 Tm to 0.5 Tm: Used for systems requiring moderate densification, or where minimal grain growth is desired. May be used for reactive or temperature-sensitive powders.

0.5 Tm to 0.7 Tm: Standard range for full consolidation of many alloys. Balances densification rate with control of microstructural evolution.

0.7 Tm to 0.9 Tm: Used for challenging-to-densify powders, blended elemental systems, or where interfacial diffusion between core and shell is necessary. Also applicable to refractory metal systems and multi-material interfaces.

Temperature is maintained within tight tolerances (±10-15°C) to ensure uniformity across the component.

### Setting HIP Pressure

Pressure ensures uniform compaction and pore closure throughout the powder volume. It is applied isostatically, allowing consolidation in all directions without distortion of the outer shell.

< 5 ksi (34 MPa): may be insufficient for most metal powder systems unless pre-sintered or pre-compacted.

5 ksi < pressure < 10 ksi (34-69 MPa): Suitable for highly compressible powders or for low-density ceramic-metal blends.

10 ksi < pressure < 20 ksi (69-138 MPa): Common range for aerospace and industrial alloy systems, enabling effective densification with minimal dimensional distortion.

20 ksi < pressure < 30 ksi (138-207 MPa): Used for refractory alloys, hard-to-densify blends, or applications requiring near-theoretical density.

> 30 ksi (207+ MPa): High-pressure HIP systems may be used for advanced composites, extremely fine powders, or site-specific applications requiring enhanced interfacial bonding.

### Setting HIP Time

The hold time at temperature and pressure is selected to ensure complete densification and to facilitate any required diffusion bonding at the shell-core interface. HIP time also affects grain growth, phase transformations, and residual stress.

< 1 hour: Short-cycle HIP may be used for near-full-density preforms or small components.

1-5 hours: Standard duration for most alloy systems with well-packed powder fill.

5-10 hours: Used for systems with low preform density, blended elemental compositions, or slow diffusion kinetics.

> 10 hours: Extended cycles may be required for refractory systems, high-viscosity matrices, or components with large thermal mass.

Time may also be increased to support phase homogenization or to promote bonding in hybrid or multi-layered materials.

### Cooling Methods After HIP

After completion of the hold cycle, the component is cooled under controlled conditions to avoid distortion, thermal shock, or unwanted phase transformations. Cooling approach is selected based on alloy system, shell geometry, and post-processing requirements.

Natural Cool: Passive cooling within the HIP vessel. Suitable for most metals and alloys with low residual stress sensitivity. Offers simplicity and cost-effectiveness.

Forced Convection Cool: Accelerated cooling using inert gas circulation or heat exchangers. Reduces cycle time and improves dimensional control. Often used for heat-sensitive or distortion-prone geometries.

In some embodiments, the cooling rate is actively controlled (e.g., ramped or staged) to influence microstructure, stress state, or to meet specification requirements for downstream thermal treatments.

### POST-CONSOLIDATION PROCESSING THE CONSOLIDATED PREFORM

Following hot isostatic pressing (HIP), the consolidated preform may in the form of a preform and may undergo additional processing steps to achieve final geometry, surface finish, mechanical properties, or form factor. These post-consolidation operations may include heat treatment, net-shape machining, near-net-shape forming, or bulk thermomechanical processing (TMP). The specific combination of steps is tailored to the material system, intended application, and the geometric complexity of the component. Because the shell remains an integral structural portion of the finished component, all post-processing operations are performed with the shell in place.

### Heat Treating

Post-HIP heat treatment may be performed to refine the microstructure, relieve residual stresses, improve mechanical properties, or tailor phase distribution. The selected heat treatment schedule depends on the alloy chemistry, HIP conditions, and intended service environment. In multi-material systems, heat treatment may also be used to homogenize or stabilize the interface between the shell and core.

Ambient Air Furnace: Suitable for oxidation-resistant materials or for stress relief cycles that do not require an inert or reducing atmosphere. Common for stainless steels, nickel-based alloys, or cobalt alloys.

Vacuum Furnace: Preferred for oxidation-sensitive materials such as titanium, refractory metals, or fine-grain powders. Vacuum processing minimizes surface contamination and is essential when maintaining a clean or reactive surface condition is important.

Other Environments: Inert gas (e.g., argon, helium), partial pressure, or reducing atmospheres (e.g., hydrogen) may be used for specific alloy systems. Controlled cooling or staged thermal ramps may be employed to avoid cracking, distortion, or phase segregation.

Heat treatment profiles may include solution annealing, aging, stress relief, or diffusion cycles, depending on the desired final microstructure.

### Net-Shape Processing

Net-shape processing refers to subtractive or additive operations used to bring the consolidated component to final dimensions and tolerances. Because the shell approximates the final geometry, minimal material removal may be required. The goal is to produce components that are ready for assembly or end-use without extensive secondary processing.

Final Machining: This may include turning, milling, drilling, or grinding to achieve precise tolerances, flatness, concentricity, or functional surfaces (e.g., sealing faces, threaded ports, mating interfaces). Machining is often focused on localized features rather than bulk stock removal.

Finishing Methods: Additional surface finishing may be performed to improve surface roughness, remove residual oxides, or enhance appearance or function. Finishing options may include:
Machine Milling: Applied for complex surface refinement or precise surface contouring.

Chemical Milling: Used to selectively remove surface layers or improve dimensional precision without mechanical stress.

Sand Blasting: Applied to remove oxides, smooth surfaces, or generate uniform texture.

Other: Techniques such as electropolishing, abrasive flow machining, or vibratory finishing may also be used, depending on component requirements.

### Near-Net-Shape (NNS) Processing

In some embodiments, the HIP-consolidated component may be processed further through deformation-based shaping operations. These near-net-shape (NNS) techniques allow for refinement of external geometry, enhancement of grain structure, or adaptation to mating assemblies.

Finish Forging: Applied to refine geometry and internal structure. May be performed at sub-HIP temperatures to preserve densification while introducing directional grain flow.

Creep Forming: Utilized for complex or contoured shapes, particularly in thin-walled or aerospace applications. Relies on time-dependent deformation under load.

Hot Forming: Thermally assisted pressing or shaping, often used to achieve compound curvature or to flatten surfaces for mounting or assembly.

Other: May include mandrel forming, superplastic forming, or local embossing of features.

These methods enable greater geometric flexibility without full-scale bulk forming.

### Bulk Forming and Thermomechanical Processing (TMP) for Wrought Product Form

For applications requiring wrought material properties (e.g., fatigue life, anisotropic strength), the consolidated component may be subjected to bulk deformation and TMP. These processes reshape the material while simultaneously modifying microstructure through strain hardening, recrystallization, and grain refinement.

Closed Die Forging: Enables near-net or net-shape component formation with tight dimensional tolerances and favorable fiber orientation.

Rotary Forging: Offers localized deformation and is well-suited for axisymmetric components such as shafts or rings.

Cogging: Applied to large billets to reduce cross-section and prepare material for subsequent forming steps.

Multi-Axis Compression: Used for complex shapes or isotropic mechanical properties, especially where directional loading is not uniform.

Other: May include extrusion, rolling, or radial forging, depending on the component design and required mechanical properties.

These processes are often paired with interim or final heat treatments to control strength, ductility, or grain structure.

The following figures illustrate selected stages of a specific embodiment of the disclosed method. While these figures depict particular steps, geometries, and arrangements for illustrative purposes, the invention is not limited to the specific details shown and may encompass a range of variations within the scope of the claims.

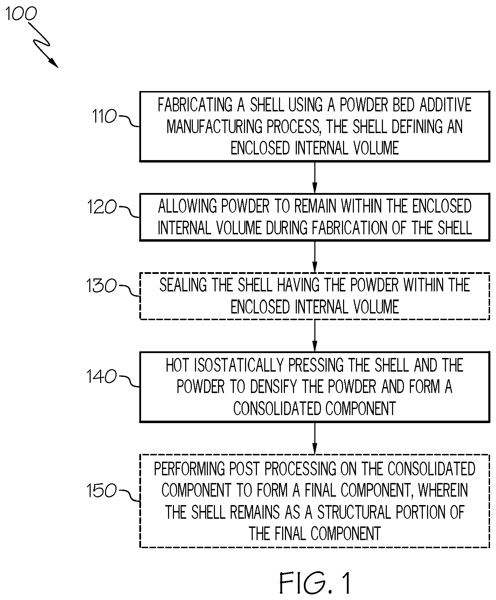

FIG. 1 illustrates an example method 100 for manufacturing a consolidated component using a powder bed additive manufacturing process and hot isostatic pressing (HIP). The method produces a monolithic, fully dense structure in which the shell and internal volume are derived from the same powder feedstock. The shell remains as an integral portion of the final component, and no separate powder loading or sealing steps are required.

At Step 110, a shell is fabricated using a powder bed additive manufacturing process, the shell defining an enclosed internal volume. The shell may be fabricated using a powder bed additive manufacturing process such as laser powder bed fusion (L-PBF) or electron beam powder bed fusion (EB-PBF). The shell is constructed in a layer-by-layer manner from a metallic powder feedstock and defines an enclosed internal volume. The shell may be designed to reflect the near-net-shape geometry of the final part, with appropriate wall thickness and structural integrity to support consolidation under HIP.

At Step 120, powder is allowed to remain within the enclosed internal volume during fabrication of the shell. During fabrication of the shell, the process inherently leaves unsintered powder within this internal cavity, which becomes passively encapsulated as part of the build. No additional material need be introduced. The unsintered powder retained inside the shell during the additive manufacturing process remains within the internal volume and serves as the internal mass to be consolidated. This in-situ encapsulation eliminates the need for post-build powder filling, sealing, or core loading operations, simplifying the overall workflow and reducing contamination risk.

At Step 130, the shell having the powder within the enclosed internal volume may be sealed to ensure containment and prevent contamination. This sealing process is significant for maintaining the integrity of the powder and the overall structure during subsequent processing steps. Various methods can be employed to seal the shell, including crimping, welding, or using specialized sealing materials. Proper sealing ensures that the internal powder remains undisturbed and intact, ready for the hot isostatic pressing (HIP) stage. The effectiveness of this sealing step directly impacts the quality and performance of the final consolidated component.

At Step 140, the encapsulated structure is subjected to hot isostatic pressing. During HIP, the entire assembly is exposed to elevated temperature and isostatic gas pressure for a selected duration. The unsintered internal powder consolidates through plastic deformation and diffusion, while simultaneously bonding metallurgically to the surrounding shell. Because both the shell and powder are compositionally identical, the result is a continuous, fully dense, homogeneous component. The component may be in the form of a final component or a preform that will subsequently become a component after completing the following post-processing.

At Step 150, post-processing may be performed on the consolidated component to form a final component, wherein the shell remains as a structural portion of the final component. The post-processing operations may include processes such as heat treatment, machining, surface finishing, or forming. These steps refine geometry, surface condition, and mechanical properties. Since the shell remains part of the final component, no de-canning, capsule removal, or secondary bonding operations are necessary.

The method illustrated in FIG. 1 enables efficient, integrated component production using a single-material system.

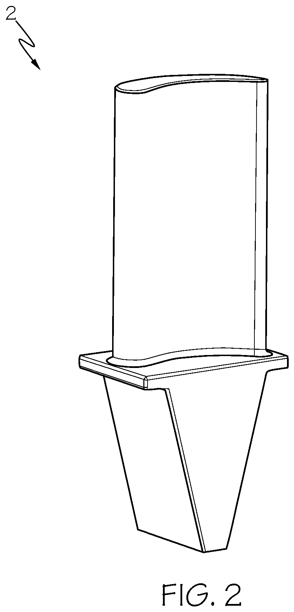

FIG. 2 illustrates a perspective view of an additively manufactured shell 2, which is created using a powder bed fusion process such as Laser Powder Bed Fusion (L-PBF). The shell defines an enclosed internal volume that precisely corresponds to the geometry desired for a preform of the final component. This shell structure is designed to maintain sufficient mechanical integrity, effectively encapsulating the internal powder, ensuring structural support during subsequent processing steps, and acting as a permanent structural portion of the finished component.

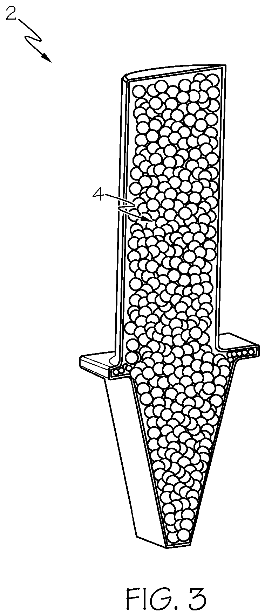

FIG. 3 shows a cross-sectional view of the component immediately after the additive manufacturing step. It clearly depicts the additively manufactured shell 2 and the unsintered metallic powder 4 retained within its enclosed internal volume. The powder within the shell remains loose, unconsolidated, and chemically identical to the shell, ensuring metallurgical compatibility for subsequent hot isostatic pressing (HIP).

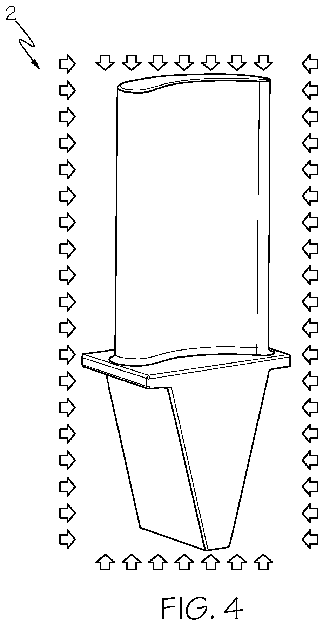

FIG. 4 provides a schematic representation of the component undergoing hot isostatic pressing (HIP). During HIP, elevated temperature and uniform isostatic gas pressure consolidate the internal powder 4, eliminating porosity, causing densification, and facilitating diffusion bonding with the shell 2. The shell actively participates in the consolidation process, forming a continuous, dense, and homogeneous structure with the internal powder.

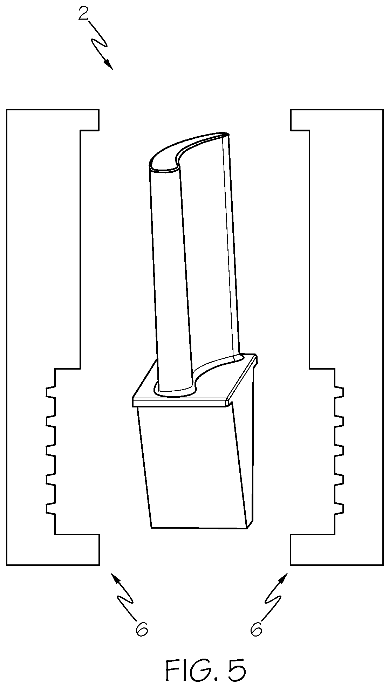

FIG. 5 illustrates a hot forging step after HIP consolidation, showing the partially processed preform. This step may involve additional mechanical deformation, which refines the grain structure, enhances mechanical properties, and adjusts the final geometry of the component 6. The shell 2 remains an integral part, supporting and defining the overall geometry and maintaining structural continuity.

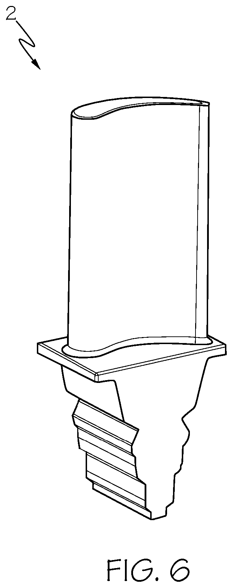

FIG. 6 presents the final consolidated component after all post-processing steps have been completed. The shell 2 is fully integrated and permanently bonded as a structural portion of the final part, now having undergone additive manufacturing, powder encapsulation, HIP consolidation, and mechanical processing such as hot forging. The resulting component 6 exhibits superior density, strength, and geometric precision, controlled for its intended application with minimal waste and streamlined production.

### EXAMPLES

**In** a representative embodiment, a consolidated blade component can be manufactured using the disclosed method. A shell may be fabricated using laser powder bed fusion (L-PBF), defining an enclosed internal volume matching the near-net-shape geometry of the desired turbine blade. The powder intended for encapsulation within the enclosed internal volume may have a spherical particle morphology with a particle size distribution ranging between 15 micrometers and 63 micrometers. Such powder could comprise a niobium-based alloy, specifically niobium alloyed with approximately 23 weight percent tungsten and 9 weight percent titanium.

Following hypothetical fabrication, the shell containing the powder would undergo vacuum degassing at approximately 10⁻⁶ torr and a temperature corresponding to approximately 0.3 of the melting temperature (Tm) of the alloy. After vacuum degassing, the shell would be sealed using tungsten inert gas (TIG) welding to ensure complete containment of the powder and to prevent contamination.

Subsequently, the sealed structure would be subjected to hot isostatic pressing (HIP) at approximately 900°C and a pressure of about 20 ksi for roughly three hours. This HIP cycle would aim to fully densify the powder, eliminate porosity, and facilitate diffusion bonding between the powder core and the shell, theoretically forming a structurally integrated consolidated component.

Potential post-processing steps could include heat treatment in a vacuum furnace, designed to refine microstructure and relieve residual stresses, followed by final machining to achieve precise dimensional tolerances and surface finish specifications required for turbine blade applications.

The resulting blade component produced by such a method would be expected to exhibit excellent dimensional accuracy, structural integrity, and mechanical properties suitable for high-performance turbine applications, highlighting the potential effectiveness of the disclosed manufacturing method.

Although various embodiments of the disclosed methods have been shown and described, modifications may occur to those skilled in the art upon reading the specification. The present application includes such modifications and is limited only by the scope of the claims.

Example 1. A method for manufacturing a consolidated component, the method comprising:
fabricating a shell using a powder bed additive manufacturing process, the shell defining an enclosed internal volume;
allowing powder to remain within the enclosed internal volume during fabrication of the shell; and
hot isostatically pressing the shell and the powder to densify the powder and form a consolidated component.

Example 2. The method of Example 1, further comprising pre-processing the powder by at least one of powder mixing, mechanical milling, and ultrasonic particulate coating.

Example 3. The method of Example 2, wherein the mechanical milling is selected from tumbler ball milling, vibratory ball milling, attrition milling, and rod milling.

Example 4. The method of any one of Examples 1 to 3, further comprising sealing the shell.

Example 5. The method of Example 4, wherein the sealing the shell comprises mechanical crimping, welding, or both.

Example 6. The method of Example 5, wherein the welding is selected from tungsten inert gas welding, laser welding, or solid-state welding.

Example 7. A method for manufacturing a consolidated component, the method comprising:
fabricating a shell using a powder bed additive manufacturing process, the shell defining an enclosed internal volume;
allowing powder to remain within the enclosed internal volume during fabrication of the shell;
sealing the shell having the powder within the enclosed internal volume;
hot isostatically pressing the shell and the powder after sealing to densify the powder and diffusion bond the powder to the shell to form a consolidated preform; and
performing post-processing on the consolidated preform to form a final component, wherein the shell remains as a structural portion of the final component.

Example 8. The method of Example 7, wherein the powder comprises at least one of niobium, tungsten and titanium.

Example 9. The method of any one of Examples 7 and 8, wherein the powder comprises niobium with 23 weight percent tungsten and 9 weight percent titanium.

Example 10. The method of any one of Examples 7 to 9, wherein the powder has a spherical particle morphology with a particle size distribution between 15 micrometers and 63 micrometers.

Example 11. The method of any one of Examples 7 to 10, further comprising vacuum degassing the shell prior to sealing, at a temperature corresponding to approximately 0.3 Tm and a pressure of approximately 10⁻⁶ torr.

Example 12. The method of any one of Examples 7 to 11, wherein the hot isostatic pressing is performed at approximately 900°C, 20 ksi, and for a duration of approximately three hours.

Example 13. The method of any one of Examples 7 to 12, wherein the post-processing comprises heat treatment and final machining.

Example 14. The method of any one of Examples 7 to 13, wherein the consolidated component is a blade component.

## Claims

1. A method (100) for manufacturing a consolidated component, the method comprising:
fabricating a shell (2) using a powder bed additive manufacturing process, the shell (2) defining an enclosed internal volume;
allowing powder to remain within the enclosed internal volume during fabrication of the shell (2); and
hot isostatically pressing the shell (2) and the powder to densify the powder and form a consolidated component (6).

2. The method (100) of Claim 1, wherein the powder bed additive manufacturing process comprises at least one of laser powder bed fusion and electron beam powder bed fusion.

3. The method (100) of any one of Claims 1 or 2, wherein the powder includes enhancement particulates selected from the group consisting of oxides, nitrides, borides, carbides, and combinations thereof.

4. The method (100) of Claim 3, wherein the enhancement particulates comprise at least one of yttria, alumina, zirconia, hafnia, titanium nitride, boron nitride, titanium diboride, zirconium diboride, titanium carbide, zirconium carbide, and silicon carbide.

5. The method (100) of any one of Claims 1 to 4, wherein the powder comprises at least one of a pre-alloyed metallic powder and blended elemental powder composition.

6. The method (100) of any one of Claims 1 to 5, wherein the powder comprises at least one of spherical, spheroidal and granular morphology.

7. The method (100) of any one of Claims 1 to 6, further comprising pre-processing the powder by at least one of powder mixing, mechanical milling, and ultrasonic particulate coating.

8. The method (100) of any one of Claims 1 to 7, wherein the powder is classified by particle size distribution within a range of less than 10 micrometers to 1000 micrometers.

9. The method (100) of any one of Claims 1 to 8, further comprising degassing the shell (2) and powder prior to hot isostatic pressing.

10. The method (100) of Claim 9, wherein degassing is performed under vacuum at a temperature between 0.3 Tm and 0.5 Tm and a pressure between 10⁻⁶ torr and 10⁻⁹ torr.

11. The method (100) of any one of Claims 1 to 10, further comprising sealing the shell (2).

12. The method (100) of any one of Claims 1 to 11, wherein the hot isostatic pressing is conducted at a pressure between 10 ksi and 30 ksi and a temperature between 0.5 Tm and 0.9 Tm.

13. The method (100) of any one of Claims 1 to 12, wherein a duration the hot isostatic pressing is between 1 hour and 10 hours.

14. The method (100) of any one of Claims 1 to 13, further comprising post-processing the consolidated component, wherein the post-processing comprises heat treating, net-shape machining, near-net-shape forming, or bulk forming.

15. The method (100) of Claim 14, wherein the post-processing further comprises thermomechanical processing selected from closed die forging, rotary forging, cogging, or multi-axis compression.
